# EUROPÄISCHE PATENTSCHRIFT

(11) **EP 3 278 935 B1**
(45) Veröffentlichungstag und Bekanntmachung des Hinweises auf die Patenterteilung: **21.10.2020**
(21) Anmeldenummer: 17175946.7
(22) Anmeldetag: 14.06.2017
(51) Int. Cl.: B25F 5/00

(54) **KONTAKTHALTERVORRICHTUNG FÜR EINE HANDWERKZEUGMASCHINE**
CONTACT HOLDER FOR A HAND TOOL
DISPOSITIF DE SUPPORT DE CONTACT POUR UNE MACHINE-OUTIL MANUELLE

(30) Priorität: 01.08.2016 DE 102016214106
(43) Veröffentlichungstag der Anmeldung: 07.02.2018
(73) Patentinhaber: Robert Bosch GmbH, 70442 Stuttgart (DE)
(72) Erfinder: Mustafa, Selim, 70565 Stuttgart (DE); Fischle, Benjamin Nikolas, 71711 Murr (DE); Dietel, Juergen, 70597 Stuttgart (DE); Michl, Elisabeth, 71111 Waldenbuch (DE); Orendi, Erwin, 73728 Esslingen (DE); Weiss, Michael, 70563 Stuttgart (DE)

(56) Entgegenhaltungen:
- EP-A1- 2 759 379
- EP-A2- 2 524 773
- US-A1- 2007 224 492
- US-A1- 2012 292 070
- US-A1- 2014 159 662
- US-A1- 2015 132 988
- US-B1- 6 237 698

## Beschreibung

### Stand der Technik

Aus DE 10 2014 223 043 A1 ist bereits eine Kontakthaltervorrichtung für eine Handwerkzeugmaschine bekannt. Die bekannte Kontakthaltervorrichtung umfasst zumindest einen, insbesondere innerhalb einer Gehäuseeinheit der Handwerkzeugmaschine anordenbaren, Grundkörper zu einer Aufnahme und/oder Fixierung von Kontaktelementen zu einer Übertragung von Datensignalen und/oder elektrischer Energie, wobei der Grundkörper zumindest eine Anordnungsebene aufweist, in der zumindest eine Gruppe von Kontaktelementen angeordnet ist. Eine weitere Kontakthaltevorrichtung gemäß der Präambel des Anspruchs 1 ist aus US 2007/224492 A1 bekannt.

### Offenbarung der Erfindung

Die Erfindung geht aus von einer Kontakthaltervorrichtung für eine Handwerkzeugmaschine, mit zumindest einem, insbesondere innerhalb einer Gehäuseeinheit der Handwerkzeugmaschine anordenbaren, Grundkörper zu einer Aufnahme und/oder Fixierung von Kontaktelementen zu einer Übertragung von Datensignalen und/oder elektrischer Energie, wobei der Grundkörper zumindest eine Anordnungsebene aufweist, in der zumindest eine Gruppe von Kontaktelementen angeordnet ist.

Es wird vorgeschlagen, dass der Grundkörper zumindest eine weitere Anordnungsebene aufweist, in der zumindest eine weitere Gruppe von Kontaktelementen angeordnet ist und die versetzt zur Anordnungsebene angeordnet ist. Unter einer "Anordnungsebene" soll insbesondere eine Ebene verstanden werden, die durch zumindest zwei Kontaktelemente, insbesondere durch zumindest zwei Kontaktelemente einer Gruppe von Kontaktelementen, verläuft und/oder die zumindest zwei Kontaktelemente schneidet, insbesondere zumindest zwei Querschnittsachsen von zumindest zwei Kontaktelementen einer Gruppe aufweist. Vorzugsweise verläuft und/oder schneidet die Anordnungsebene zumindest drei oder mehr Kontaktelemente, insbesondere drei oder mehr Kontaktelemente einer Gruppe von Kontaktelementen. Unter einer "Gruppe von Kontaktelementen" soll insbesondere eine Anordnung von Kontaktelementen verstanden werden, die zu einer Erfüllung zumindest einer gemeinsamen Funktion, wie beispielsweise zu einer Übertragung von elektrischer Energie o. dgl., zusammenwirken und/oder die in einer Art angeordnet sind, in der zumindest zwei direkt benachbarte Kontaktelemente einen minimalen Abstand relativ zueinander aufweisen, der insbesondere kleiner ist als 100 mm, bevorzugt kleiner ist als 50 mm und besonders bevorzugt kleiner ist als 10 mm. Das Kontaktelement kann als Stecker, als Kontaktbuchse, als Kabel, als Kabelschuh oder als ein anderes, einem Fachmann als sinnvoll erscheinendes Element ausgebildet sein, das zu einer Übertragung von Datensignalen und/oder elektrischer Energie vorgesehen ist. Unter "vorgesehen" soll insbesondere speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Eine Querschnittsachse eines Kontaktelements verläuft vorzugsweise in einer Hauterstreckungsebene des Kontaktelements. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Bevorzugt verläuft eine Querschnittsachse eines Kontaktelements, insbesondere alle Querschnittsachsen einer Gruppe von Kontaktelementen, in der Anordnungsebene oder in der weiteren Anordnungsebene, insbesondere in Abhängigkeit von einer Anordnung des jeweiligen Kontaktelements in der Anordnungsebene oder in der weiteren Anordnungsebene. Vorzugsweise ist in der Anordnungsebene zumindest eine Gruppe von mindestens drei Kontaktelementen angeordnet. Bevorzugt ist in der weiteren Anordnungsebene zumindest eine weitere Gruppe von mindestens drei Kontaktelementen angeordnet. Es ist jedoch auch denkbar, dass in der Anordnungsebene und/oder in der weiteren Anordnungseben eine von drei abweichende Anzahl von Kontaktelementen, die insbesondere eine Gruppe von Kontaktelementen bilden, angeordnet sind.

Die Anordnungseben und die weitere Anordnungsebene werden vorzugsweise durch den Grundkörper vorgegeben, insbesondere durch eine geometrische Anordnung von Kontaktelementaufnahmebereichen des Grundkörpers, die zu einer Aufnahme und/oder Fixierung von jeweils zumindest einem Kontaktelement von zumindest einer Gruppe von Kontaktelementen vorgesehen sind. Der Grundkörper ist vorzugsweise als ein einzelnes Bauteil ausgebildet. Es ist jedoch auch denkbar, dass der Grundkörper aus mehreren Unterbauteilen zusammengesetzt ist, die kraftschlüssig und/oder formschlüssig miteinander verbunden sind, insbesondere aneinander fixiert sind.

Mittels der erfindungsgemäßen Ausgestaltung kann vorteilhaft eine kompakte Kontakthaltervorrichtung realisiert werden, die eine vorteilhafte Aufnahme von unterschiedlichen Gruppen von Kontaktelementen ermöglicht. Es kann vorteilhaft eine räumliche Trennung von Gruppen von Kontaktelementen ermöglicht werden. Es kann vorteilhaft auf einem geringen Bauraum eine große Anzahl an Gruppen von Kontaktelementen angeordnet werden. Es kann konstruktiv einfach eine vorteilhafte Ausnutzung eines zur Verfügung stehenden Bauraums ermöglicht werden.

Des Weiteren wird vorgeschlagen, dass die Anordnungsebene und die weitere Anordnungsebene parallel versetzt zueinander angeordnet sind, insbesondere betrachtet entlang einer zumindest im Wesentlichen senkrecht zu einer Verbindungsrichtung der Kontaktelemente verlaufenden Richtung. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorteilhafterweise verlaufen die Anordnungsebene und die weitere Anordnungsebene zumindest im Wesentlichen parallel relativ zueinander. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Bevorzugt sind die Anordnungsebene und die weitere Anordnungsebene entlang einer zumindest im Wesentlichen senkrecht zu einer Verbindungsrichtung zumindest einer Gruppe von Kontaktelementen verlaufenden Richtung relativ zueinander versetzt angeordnet. Unter einer "Verbindungsrichtung" soll insbesondere eine Richtung verstanden werden, entlang derer eine Verbindung der Gruppe von Kontaktelementen mit korrespondierenden Kontaktelementen einer weiteren Vorrichtung, insbesondere eines optionalen Funktionsmoduls, herstellbar ist. Unter einem "optionalen Funktionsmodul" soll in diesem Zusammenhang insbesondere ein Modul, wie beispielsweise eine Baugruppe und/oder ein Gerät, verstanden werden, welches optional mit der Handwerkzeugmaschine, die die Kontakthaltervorrichtung umfasst, gekoppelt werden kann. Vorzugsweise soll darunter insbesondere ein Modul verstanden werden, das in einem gekoppelten Zustand dazu vorgesehen ist, eine zusätzliche Funktion bereitzustellen, jedoch für eine grundlegende Funktion der Handwerkzeugmaschine irrelevant ist. Es sind verschiedene, einem Fachmann als sinnvoll erscheinende optionale Funktionsmodule denkbar. Insbesondere ist das optionale Funktionsmodul als ein optionales Absaugungsmodul ausgebildet. Besonders bevorzugt ist das optionale Funktionsmodul als ein teilautonomes Absaugungsmoduls ausgebildet, welches lediglich zu einer Energieversorgung mit der Handwerkzeugmaschine, insbesondere mit an der Kontakthaltervorrichtung aufgenommenen und/oder fixierten Kontaktelementen, koppelbar ist und eine interne Antriebseinheit zu einer Erzeugung eines Absaugungsfluidstroms aufweist. Zudem ist es denkbar, dass über die Handwerkzeugmaschine, insbesondere über an der Kontakthaltervorrichtung aufgenommenen und/oder fixierten Kontaktelementen, zusätzlich eine Ansteuerung des optionalen Absaugungsmoduls, wie insbesondere ein An- und Abschalten der Absaugung, erfolgt. Durch eine derartige Ausgestaltung kann vorteilhaft eine kompakte Kontakthaltervorrichtung realisiert werden, die eine vorteilhafte Aufnahme von unterschiedlichen Gruppen von Kontaktelementen ermöglicht. Es kann vorteilhaft eine räumliche Trennung von Gruppen von Kontaktelementen ermöglicht werden. Es kann vorteilhaft auf einem geringen Bauraum eine große Anzahl an Gruppen von Kontaktelementen angeordnet werden. Es kann konstruktiv einfach eine vorteilhafte Ausnutzung eines zur Verfügung stehenden Bauraums ermöglicht werden.

Ferner wird vorgeschlagen, dass der Grundkörper in der Anordnungsebene angeordnete Einzelaufnahmekammern zu einer Aufnahme von einzelnen Kontaktelementen der Gruppe von Kontaktelementen und in der weiteren Anordnungsebene angeordnete Einzelaufnahmekammern zu einer Aufnahme von einzelnen Kontaktelementen der weiteren Gruppe von Kontaktelementen umfasst. Die Einzelaufnahmekammern bilden vorzugsweise die Kontaktelementaufnahmebereiche des Grundkörpers. Bevorzugt sind die Einzelaufnahmekammern zu einer Abschirmung der Kontaktelemente vorgesehen. Mittels der erfindungsgemäßen Ausgestaltung kann vorteilhaft eine räumliche Trennung von Gruppen von Kontaktelementen ermöglicht werden. Es kann vorteilhaft auf einem geringen Bauraum eine große Anzahl an Gruppen von Kontaktelementen angeordnet werden. Es kann konstruktiv einfach eine vorteilhafte Ausnutzung eines zur Verfügung stehenden Bauraums ermöglicht werden. Es kann eine konstruktiv einfache Abschirmung der Kontaktelemente realisiert werden, die insbesondere unabhängig ist von einem zusätzlichen Abschirmungselement.

Zudem wird vorgeschlagen, dass der Grundkörper zumindest einen Aufnahmebereich für zumindest ein Abschirmungs- und/oder Filterelement zu einer Abschirmung von einzelnen Kontaktelementen der Gruppe von Kontaktelementen und/oder der weiteren Gruppe von Kontaktelementen und/oder zu einer Filterung von Datensignalen aufweist. Bevorzugt ist der Aufnahmebereich als Aufnahmekammer ausgebildet, in der zumindest ein als Ferrit-Kern und/oder Filterplatine ausgebildetes Abschirmungs- und/oder Filterelement anordenbar ist. Es ist jedoch auch denkbar, dass der Aufnahmebereich und/oder das Abschirmungs- und/oder Filterelement eine andere, einem Fachmann als sinnvoll erscheinende Ausgestaltung aufweist. Zusätzlich oder alternativ kann in dem Aufnahmebereich auch ein Entstörelement oder ein anderes, einem Fachmann als sinnvoll erscheinendes Element angeordnet werden. Der Aufnahmebereich ist vorzugsweise relativ zu den Einzelaufnahmekammern beabstandet am Grundkörper angeordnet. Bevorzugt ist der Aufnahmebereich entlang einer zumindest im Wesentlichen parallel zur Verbindungsrichtung verlaufenden Richtung relativ zu den Einzelaufnahmekammern versetzt angeordnet. Alternativ oder zusätzlich ist es denkbar, dass der Aufnahmebereich entlang einer zumindest im Wesentlichen senkrecht zur Verbindungsrichtung verlaufenden Richtung relativ zu den Einzelaufnahmekammern versetzt angeordnet ist. Mittels der erfindungsgemäßen Ausgestaltung kann besonders vorteilhaft eine Abschirmung und/oder eine Filterung realisiert werden. Es kann vorteilhaft eine räumliche Trennung von Funktionsgruppen ermöglicht werden. Es kann vorteilhaft auf einem geringen Bauraum eine große Anzahl an unterschiedlichsten Funktionsgruppen angeordnet werden. Es kann konstruktiv einfach eine vorteilhafte Ausnutzung eines zur Verfügung stehenden Bauraums ermöglicht werden. Es kann eine konstruktiv einfache Abschirmung der Kontaktelemente realisiert werden.

Des Weiteren wird vorgeschlagen, dass der Aufnahmebereich zumindest teilweise in der weiteren Anordnungsebene angeordnet ist. Vorzugsweise schneidet die weitere Anordnungsebene den Aufnahmebereich. Bevorzugt ist der Aufnahmebereich entlang einer zumindest im Wesentlichen senkrecht zur Anordnungsebene und/oder zur weiteren Anordnungsebene verlaufenden Richtung relativ zu der Anordnungsebene versetzt angeordnet. Mittels der erfindungsgemäßen Ausgestaltung kann besonders vorteilhaft eine Abschirmung und/oder eine Filterung realisiert werden. Es kann vorteilhaft eine räumliche Trennung von Funktionsgruppen ermöglicht werden. Es kann vorteilhaft auf einem geringen Bauraum eine große Anzahl an unterschiedlichsten Funktionsgruppen angeordnet werden. Es kann konstruktiv einfach eine vorteilhafte Ausnutzung eines zur Verfügung stehenden Bauraums ermöglicht werden. Es kann eine konstruktiv einfache Abschirmung der Kontaktelemente realisiert werden.

Ferner wird vorgeschlagen, dass der Grundkörper zumindest einen Elektronikaufnahmebereich aufweist, in der zumindest eine Elektronikeinheit, insbesondere eine Bluetootheinheit und/oder eine RFID-Einheit, anordenbar ist. Besonders bevorzugt ist der Elektronikaufnahmebereich als Aufnahmekammer ausgebildet, in der Zusatzeinheiten anordenbar sind. Mittels der erfindungsgemäßen Ausgestaltung kann vorteilhaft auf einem geringen Bauraum eine große Anzahl an unterschiedlichsten Funktionsgruppen angeordnet werden. Es kann konstruktiv einfach eine vorteilhafte Ausnutzung eines zur Verfügung stehenden Bauraums ermöglicht werden.

Zudem wird vorgeschlagen, dass der Grundkörper zumindest einen Elektronikaufnahmebereich umfasst, der zwischen der Anordnungsebene und der weiteren Anordnungsebene angeordnet ist, insbesondere betrachtet entlang einer zumindest im Wesentlichen senkrecht zu einer Verbindungsrichtung der Kontaktelemente verlaufenden Richtung. Vorzugsweise ist der Elektronikaufnahmebereich zwischen der Anordnungsebene und der weiteren Anordnungsebene angeordnet, insbesondere entlang einer zumindest im Wesentlichen senkrecht zur Anordnungsebenen und/oder zur weiteren Anordnungsebene verlaufenden Richtung. Der Elektronikaufnahmebereich ist vorzugsweise entlang der zumindest im Wesentlichen senkrecht zur Anordnungsebene und/oder zur weiteren Anordnungsebene verlaufenden Richtung zwischen den Einzelaufnahmekammern der Anordnungsebene und den Einzelaufnahmekammern der weiteren Anordnungsebene angeordnet. Der Elektronikaufnahmebereich ist vorzugsweise entlang einer zumindest im Wesentlichen senkrecht zur Verbindungsrichtung verlaufenden Richtung zwischen den Einzelaufnahmekammern der Anordnungsebene und den Einzelaufnahmekammern der weiteren Anordnungsebene angeordnet. Mittels der erfindungsgemäßen Ausgestaltung kann vorteilhaft eine räumliche Trennung von Funktionsgruppen ermöglicht werden. Es kann vorteilhaft auf einem geringen Bauraum eine große Anzahl an unterschiedlichsten Funktionsgruppen angeordnet werden. Es kann konstruktiv einfach eine vorteilhafte Ausnutzung eines zur Verfügung stehenden Bauraums ermöglicht werden.

Des Weiteren wird vorgeschlagen, dass der Grundkörper zumindest teilweise einen Isolator zwischen den Kontaktelementen bildet. Der Grundkörper ist vorzugsweise dazu vorgesehen, als thermischer und/oder als elektrischer Isolator zwischen den Kontaktelementen zu wirken, insbesondere zumindest zwischen den Kontaktelementen der Gruppe von Kontaktelementen und den Kontaktelementen der weiteren Gruppe von Kontaktelementen. Insbesondere ist der Grundkörper dazu vorgesehen, als thermischer und/oder als elektrischer Isolator zwischen den einzelnen Kontaktelementen der Gruppe von Kontaktelementen und/oder zwischen den einzelnen Kontaktelementen der weiteren Gruppe von Kontaktelementen zu wirken. Bevorzugt ist der Grundkörper aus einem thermostabilen Kunststoff, aus einem thermisch leitfähigen Kunststoff oder aus einem anderen, einem Fachmann als sinnvoll erscheinenden Material gebildet. Es ist jedoch auch denkbar, dass der Grundkörper alternativ oder zusätzlich einen Isolator zu weiteren Bauteilen der tragbaren Werkzeugmaschine bildet, die insbesondere benachbart zu den Kontaktelementen angeordnet sind. Mittels der erfindungsgemäßen Ausgestaltung kann vorteilhaft eine hohe Sicherheit gegen eine Überhitzung und/oder gegen einen elektrischen Kurzschluss realisiert werden. Es kann vorteilhaft eine räumliche Trennung von Funktionsgruppen ermöglicht werden. Es kann vorteilhaft auf einem geringen Bauraum eine große Anzahl an unterschiedlichsten Funktionsgruppen angeordnet werden. Es kann konstruktiv einfach eine vorteilhafte Ausnutzung eines zur Verfügung stehenden Bauraums ermöglicht werden.

Zudem wird vorgeschlagen, dass die Kontakthaltervorrichtung zumindest eine am Grundkörper angeordnete Kühleinheit zu einer Abführung von Wärme der Kontaktelemente aufweist. Insbesondere ist die Kühleinheit als passive Kühleinheit ausgebildet. Bevorzugt ist die Kühleinheit als Kühlrippeneinheit ausgebildet. Die Kühleinheit kann einteilig mit dem Grundkörper ausgebildet sein oder getrennt von diesem ausgebildet sein und an diesem fixiert sein. Es ist jedoch auch denkbar dass die Kühleinheit als aktive Kühleinheit, wie beispielsweise als Kühlgebläse o. dgl., ausgebildet ist. Mittels der erfindungsgemäßen Ausgestaltung kann vorteilhaft eine hohe Sicherheit gegen eine Überhitzung realisiert werden. Es kann eine vorteilhafte Abfuhr von Wärme ermöglicht werden, um Bauteile, die am Grundkörper angeordnet sind, vorteilhaft zu schützen. Es kann vorteilhaft eine räumliche Trennung von Funktionsgruppen ermöglicht werden. Es kann konstruktiv einfach eine vorteilhafte Ausnutzung eines zur Verfügung stehenden Bauraums ermöglicht werden.

Zudem wird eine Handwerkzeugmaschine mit zumindest einer erfindungsgemäßen Kontakthaltervorrichtung und mit zumindest einer Gehäuseeinheit vorgeschlagen, wobei die Kontakthaltervorrichtung zumindest teilweise innerhalb der Gehäuseeinheit angeordnet ist. Unter einer "Handwerkzeugmaschine" soll hier insbesondere eine Werkzeugmaschine zu einer Bearbeitung von Werkstücken verstanden werden, die von einem Bediener transportmaschinenlos transportiert werden kann. Die Handwerkzeugmaschine weist insbesondere eine Masse auf, die kleiner ist als 40 kg, bevorzugt kleiner ist als 10 kg und besonders bevorzugt kleiner ist als 5 kg. Die Handwerkzeugmaschine kann als Winkelschleifer, als Bohr- und/oder Meißelhammer, als Abbruchhammer, als Exzenterschleifmaschine, als Stichsäge, als Säbelsäge, als Gartenmaschine, als Hobelmaschine oder als eine andere, einem Fachmann als sinnvoll erscheinende Handwerkzeugmaschine ausgebildet sein.

Mittels der erfindungsgemäßen Ausgestaltung kann vorteilhaft eine kompakte Kontakthaltervorrichtung realisiert werden, die eine vorteilhafte Aufnahme von unterschiedlichen Gruppen von Kontaktelementen ermöglicht. Es kann vorteilhaft eine räumliche Trennung von Gruppen von Kontaktelementen ermöglicht werden. Es kann vorteilhaft auf einem geringen Bauraum eine große Anzahl an Gruppen von Kontaktelementen angeordnet werden. Es kann konstruktiv einfach eine vorteilhafte Ausnutzung eines zur Verfügung stehenden Bauraums ermöglicht werden.

Die erfindungsgemäße Kontakthaltervorrichtung und/oder die erfindungsgemäße Handwerkzeugmaschine sollen/soll hierbei nicht auf die oben beschriebene Anwendung und Ausführungsform beschränkt sein. Insbesondere können/kann die erfindungsgemäße Kontakthaltervorrichtung und/oder die erfindungsgemäße Handwerkzeugmaschine zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein System mit einem Zusatzmodul und mit einer Handwerkzeugmaschine, welche eine erfindungsgemäße Kontakthaltervorrichtung aufweist, in einer schematischen Darstellung,
- Fig. 2: die Handwerkzeugmaschine mit der erfindungsgemäßen Kontakthaltervorrichtung in einer schematischen Darstellung,
- Fig. 3: eine Detailansicht der erfindungsgemäßen Kontakthaltervorrichtung in einer schematischen Darstellung,
- Fig. 4: eine Detailansicht der erfindungsgemäßen Kontakthaltervorrichtung, in welcher eine Gruppe von Kontaktelementen in einer Anordnungsebene eines Grundkörpers der Kontakthaltervorrichtung angeordnet sind, in einer schematischen Darstellung,
- Fig. 5: eine Detailansicht des Grundkörpers entkoppelt von in der Anordnungsebene angeordneten Gruppe von Kontaktelementen in einer schematischen Darstellung,
- Fig. 6: eine Detailansicht der Kontakthaltervorrichtung, in welcher eine weitere Gruppe von Kontaktelementen in einer weiteren Anordnungsebene des Grundkörpers angeordnet sind, in einer schematischen Darstellung, und
- Fig. 7: eine Detailansicht auf einen Elektronikaufnahmebereich der Kontakthaltervorrichtung in einer schematischen Darstellung.

### Beschreibung des Ausführungsbeispiels

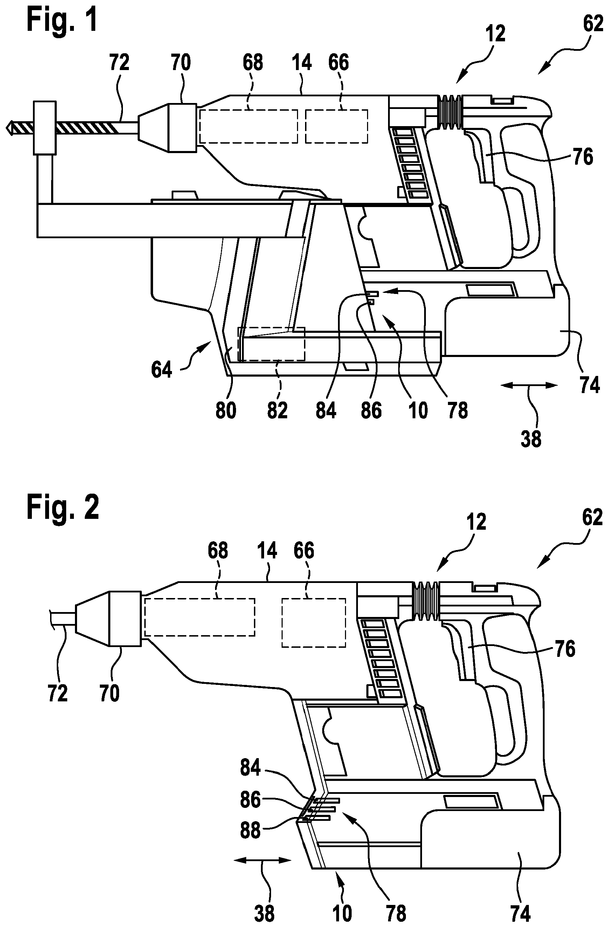

Figur 1 zeigt ein System 62 mit einem optionalen Funktionsmodul 64 und mit einer Handwerkzeugmaschine 12. Die Handwerkzeugmaschine 12 umfasst zumindest eine Kontakthaltervorrichtung 10 und zumindest eine Gehäuseeinheit 14, wobei die Kontakthaltervorrichtung 10 zumindest teilweise innerhalb der Gehäuseeinheit 14 angeordnet ist. Die Handwerkzeugmaschine 12 ist vorzugsweise als Bohrhammer ausgebildet. Grundsätzlich wäre jedoch auch eine andere, einem Fachmann als sinnvoll erscheinende Ausbildung der Handwerkzeugmaschine 12 denkbar, wie beispielsweise als Bohrmaschine, Säge, Hobel, Schrauber, Fräse, Schleifer, Winkelschleifer, Gartengerät und/oder Multifunktionswerkzeug. Die Handwerkzeugmaschine 12 weist eine Antriebseinheit 66, eine Schlagwerkseinheit 68 und die Gehäuseeinheit 14 auf. Ferner weist die Handwerkzeugmaschine 12 eine Werkzeugaufnahme 70 auf, in der ein Einsatzwerkzeug 72 auf eine, einem Fachmann bereits bekannte Art und Weise anordenbar ist. Die Antriebseinheit 66 umfasst einen nicht weiter sichtbaren Motor, insbesondere einen Elektromotor, und eine nicht weiter sichtbare Getriebeeinheit. Über den Motor und die Getriebeeinheit wird die Werkzeugaufnahme 70 in einem Betriebszustand der Handwerkzeugmaschine 12 angetrieben, insbesondere drehend angetrieben. Ferner wird über den Motor und die Getriebeeinheit die Schlagwerkseinheit 68 angetrieben. Des Weiteren weist die Handwerkzeugmaschine 12 eine Energieversorgungseinheit 74 auf. Über die Energieversorgungseinheit 74 wird die Antriebseinheit 66, insbesondere der Motor der Antriebseinheit 66, während eines Betriebs mit Energie, insbesondere elektrischer Energie, versorgt. Die Energieversorgungseinheit 74 ist als Akkuvorrichtung ausgebildet. Die Energieversorgungseinheit 74 ist als Akkumulator ausgebildet. Ferner weist die Handwerkzeugmaschine 12 einen Betriebsschalter 76 auf. Über den Betriebsschalter 76 kann ein Bediener eine Energieversorgung der Antriebseinheit 66 durch die Energieversorgungseinheit 74 steuern.

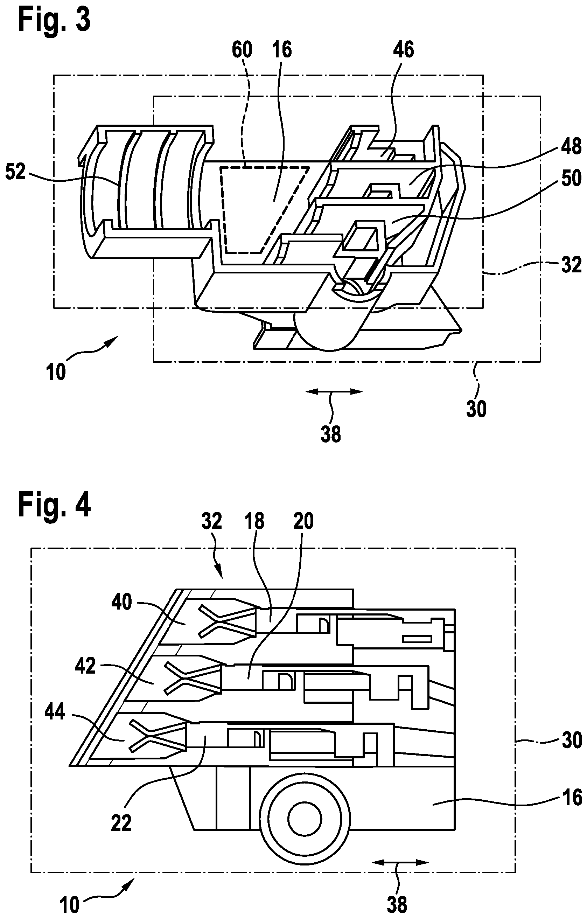

Ferner weist die Handwerkzeugmaschine 12 die Kontakthaltervorrichtung 10 auf. Die Kontakthaltervorrichtung 10 für die Handwerkzeugmaschine 12 umfasst zumindest einen, insbesondere innerhalb der Gehäuseeinheit 14 der Handwerkzeugmaschine 12 anordenbaren, Grundkörper 16 zu einer Aufnahme und/oder Fixierung von Kontaktelementen 18, 20, 22, 24, 26, 28 zu einer Übertragung von Datensignalen und/oder elektrischer Energie, wobei der Grundkörper 16 zumindest eine Anordnungsebene 30 aufweist, in der zumindest eine Gruppe 32 von Kontaktelementen 18, 20, 22 angeordnet ist (Figuren 3 bis 7). Die Handwerkzeugmaschine 12 weist eine Kopplungsvorrichtung 78 auf. Die Kopplungsvorrichtung 78 ist zu einer Kopplung des optionalen Funktionsmoduls 64 mit der Handwerkzeugmaschine 12 vorgesehen. Mittels der Kontakthaltervorrichtung 10, die im Bereich der Kopplungsvorrichtung 78 angeordnet ist, ist das optionale Funktionsmodul 64 mit der Energieversorgungseinheit 74 verbindbar. Über die mittels der Kontakthaltervorrichtung 10 aufgenommenen und/oder fixierten Kontaktelemente 18, 20, 22, 24, 26, 28, insbesondere mittels der Gruppe 32 von Kontaktelementen 18, 20, 22, kann das optionale Funktionsmodul 64 zumindest mit elektrischer Energie der Energieversorgungseinheit 74 der Handwerkzeugmaschine 12 versorgt werden. Die weitere Gruppe 34 von Kontaktelementen 24, 26, 28 sind zumindest zu einer Energieversorgung der Antriebseinheit 66 vorgesehen. Das optionale Funktionsmodul 64 benötigt keine zusätzliche Energieversorgung. Das optionale Funktionsmodul 64 ist als ein optionales Staubsaugermodul ausgebildet. Grundsätzlich wäre jedoch auch eine andere, einem Fachmann als sinnvoll erscheinende Ausbildung des optionalen Funktionsmoduls 64 denkbar. Das optionale Funktionsmodul 64 ist mittels einer nicht näher dargestellten Sicherungsvorrichtung an der Handwerkzeugmaschine 12 fixierbar. Das optionale Funktionsmodul 64 weist ein Gehäuse 80 auf. Ferner weist das optionale Funktionsmodul 64 eine elektrische Saugeinheit 82 auf, über welche insbesondere bei einer Bearbeitung eines Werkstücks entstehender Werkstückabtrag in einen nicht näher dargestellten Auffangbehälter gesaugt werden kann. Der Auffangbehälter ist innerhalb des Gehäuses 80 angeordnet. Grundsätzlich wäre jedoch auch ein externer Auffangbehälter denkbar. In Figur 2 ist das optionale Funktionsmodul 64 von der Handwerkzeugmaschine 12 demontiert und die Handwerkzeugmaschine 12 alleine dargestellt, wobei Kontaktierungsöffnungen 84, 86, 88 in der Gehäuseeinheit 14 der Handwerkzeugmaschine 12 erkennbar sind. Durch die Kontaktierungsöffnungen 84, 86, 88 sind Gegenkontaktelemente (hier nicht näher dargestellt) des optionalen Funktionsmoduls 64 mit Kontaktelementen 18, 20, 22, 24, 26, 28, die mittels der Kontakthaltervorrichtung 10 aufgenommen und/oder fixiert sind, kontaktierbar, insbesondere mit Kontaktelementen 18, 20, 22 der Gruppe 32 von Kontaktelementen 18, 20, 22.

Die Kontakthaltervorrichtung 10 ist in der Gehäuseeinheit 14 der Handwerkzeugmaschine 12 angeordnet. Die Kontakthaltervorrichtung 10 ist innerhalb der Gehäuseeinheit 14 der Handwerkzeugmaschine 12 auf eine, einem Fachmann bereits bekannte Art und Weise befestigt. In einem Übergangsbereich zwischen der Gehäuseeinheit 14 und dem Grundkörper 16 der Kontakthaltervorrichtung 10 ist ein Labyrinth ausgebildet. Hierdurch soll ein Eindringen von Staub verhindert werden. Der Grundkörper 16 ist zu einer Aufnahme von Kontaktelementen 18, 20, 22, 24, 26, 28 vorgesehen. Hinsichtlich einer Kontaktierung der Handwerkzeugmaschine 12 und des optionalen Funktionsmoduls 64 darf auf die Beschreibung der DE 10 2014 223 043 A1 verwiesen werden, deren Beschreibung zumindest im Hinblick auf die Anordnung, Ausgestaltung und/oder Funktionsweise der Kontaktelemente 18, 20, 22 der Gruppe 32 von Kontaktelementen 18, 20, 22 zu einer Verbindung mit dem optionalen Funktionsmodul 64 als Teil dieser Offenbarung gelten soll.

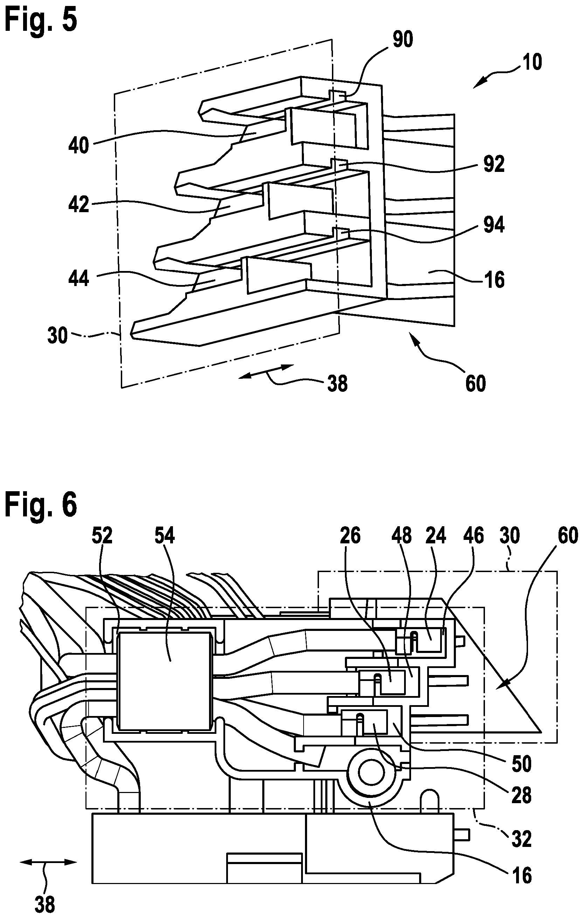

Figur 3 zeigt eine von den Kontaktelementen 18, 20, 22, 24, 26, 28 entkoppelte Detailansicht der Kontakthaltervorrichtung 10. Der Grundkörper 16 weist, insbesondere zusätzlich zur Anordnungsebene 30, zumindest eine weitere Anordnungsebene 34 auf, in der zumindest eine weitere Gruppe 36 von Kontaktelementen 24, 26, 28 angeordnet ist und die versetzt zur Anordnungsebene 30 angeordnet ist. Die weitere Gruppe 36 von Kontaktelementen 24, 26, 28 kann zu einer Übertragung von Datensignalen zwischen der Handwerkzeugmaschine 12 und dem optionalen Funktionsmodul 64 vorgesehen sein und/oder zu einer Übertragung von elektrischer Energie an interne Elektronikkomponenten der Handwerkzeugmaschine 12. Die Anordnungsebene 30 und die weitere Anordnungsebene 34 sind parallel versetzt zueinander angeordnet, insbesondere betrachtet entlang einer zumindest im Wesentlichen senkrecht zu einer Verbindungsrichtung 38 der Kontaktelemente 18, 20, 22, 24, 26, 28 verlaufenden Richtung (Vgl. Figuren 3, 6 und 7). Vorteilhafterweise verlaufen die Anordnungsebene 30 und die weitere Anordnungsebene 34 zumindest im Wesentlichen parallel relativ zueinander. Bevorzugt sind die Anordnungsebene 30 und die weitere Anordnungsebene 34 entlang einer zumindest im Wesentlichen senkrecht zur Verbindungsrichtung 38 zumindest der Gruppe 32 von Kontaktelementen 18, 20, 22 verlaufenden Richtung relativ zueinander versetzt angeordnet (vgl. Figuren 3 und 6).

Der Grundkörper 16 umfasst in der Anordnungsebene 30 angeordnete Einzelaufnahmekammern 40, 42, 44 zu einer Aufnahme von einzelnen Kontaktelementen 18, 20, 22 der Gruppe 32 von Kontaktelementen 18, 20, 22 (vgl. Figuren 4, 5 und 7) und/oder in der weiteren Anordnungsebene 34 angeordnete Einzelaufnahmekammern 46, 48, 50 zu einer Aufnahme von einzelnen Kontaktelementen 24, 26, 28 der weiteren Gruppe 36 von Kontaktelementen 24, 26, 28 (vgl. Figuren 3 und 6). Der Grundkörper 16 weist die Einzelaufnahmekammern 40, 42, 44 zu einer Aufnahme zumindest eines Kontaktelements 18, 20, 22, 24, 26, 28 auf. In dem in Figur 4 beispielhaft dargestellten Ausführungsbeispiel weist der Grundkörper 16 drei Einzelaufnahmekammern 40, 42, 44 zu einer Aufnahme von drei als Flachsteckhülsen ausgebildeten Kontaktelemente 18, 20, 22 auf. Die Kontaktelemente 18, 20, 22 sind durch eine in jeder Einzelaufnahmekammer 40, 42, 44 angeordnete Montageöffnung 90, 92, 94 mittels eines hier nicht näher dargestellten Werkzeuges in den Einzelaufnahmekammern 40, 42, 44 anordenbar und insbesondere wieder zerstörungsfrei lösbar (vgl. Figur 5). Ebenso denkbar ist es, dass die Kontaktelemente 18, 20, 22 nach einer Anordnung am Grundkörper 16 umspritzt werden und in den Grundkörper 16 zu integrieren.

Die Einzelaufnahmekammern 40, 42, 44, 46, 48, 50 bilden vorzugsweise Kontaktelementaufnahmebereiche des Grundkörpers 16. Bevorzugt sind die Einzelaufnahmekammern 40, 42, 44, 46, 48, 50 zu einer Abschirmung der Kontaktelemente 18, 20, 22, 24, 26, 28 vorgesehen. Bevorzugt umfasst der Grundkörper 16 zumindest drei Einzelaufnahmekammern 40, 42, 44, die in der Anordnungsebene 30 angeordnet sind. Insbesondere umfasst der Grundkörper 16 zumindest drei Einzelaufnahmekammern 46, 48, 50, die in der weiteren Anordnungsebene 34 angeordnet sind. Es ist jedoch auch denkbar, dass der Grundkörper 16 eine von drei abweichende Anzahl an Einzelaufnahmekammern 40, 42, 44, 46, 48, 50 je Anordnungsebene 30, 34 aufweist. Die Einzelaufnahmekammern 40, 42, 44, 46, 48, 50 trennen die Kontaktelemente 18, 20, 22, 24, 26, 28 durch isolierende Zwischenwände. Insbesondere die Einzelaufnahmekammern 46, 48, 50 der weiteren Anordnungsebene 34 positionieren die Kontaktelemente 24, 26, 28 in einem demontierten Zustand der Gehäuseeinheit 14 in einem direkten Sichtbereich. Es können vorteilhaft die Kontaktelemente 24, 26, 28 durch einen Werker mit geringem Aufwand verbunden werden (vgl. Figur 6).

Der Grundkörper 16 weist zumindest einen Aufnahmebereich 52 für zumindest ein Abschirmungs- und/oder Filterelement 54 zu einer Abschirmung von einzelnen Kontaktelementen 18, 20, 22, 24, 26, 28 der Gruppe 32 von Kontaktelementen 18, 20, 22 und/oder der weiteren Gruppe 36 von Kontaktelementen 24, 26, 28 und/oder zu einer Filterung von Datensignalen auf (Figuren 3 und 6). Bevorzugt ist der Aufnahmebereich 52 als Aufnahmekammer ausgebildet, in der zumindest ein als Ferrit-Kern und/oder Filterplatine ausgebildetes Abschirmungs- und/oder Filterelement 54 anordenbar ist. Es ist jedoch auch denkbar, dass der Aufnahmebereich 52 und/oder das Abschirmungs- und/oder Filterelement 54 eine andere, einem Fachmann als sinnvoll erscheinende Ausgestaltung aufweist. Der Aufnahmebereich 52 ist vorzugsweise relativ zu den Einzelaufnahmekammern 40, 42, 44, 46, 48, 50 beabstandet am Grundkörper 16 angeordnet. Bevorzugt ist der Aufnahmebereich 52 entlang einer zumindest im Wesentlichen parallel zur Verbindungsrichtung 38 verlaufenden Richtung relativ zu den Einzelaufnahmekammern 40, 42, 44, 46, 48, 50 versetzt angeordnet. Insbesondere ist der Aufnahmebereich 52 zumindest teilweise in der weiteren Anordnungsebene 34 angeordnet.

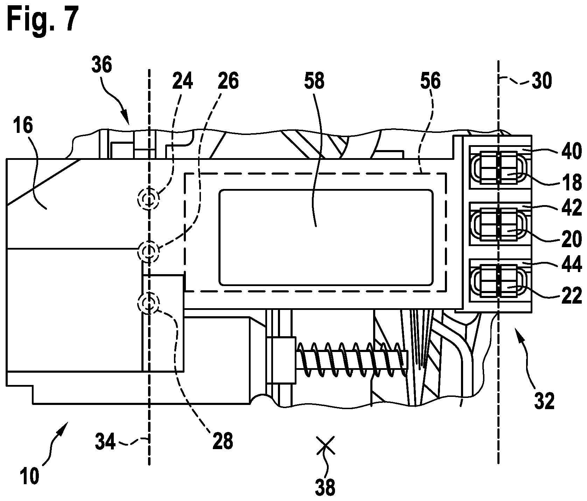

Der Grundkörper 16 weist zumindest einen Elektronikaufnahmebereich 56 auf, in der zumindest eine Elektronikeinheit 58, insbesondere eine Bluetootheinheit und/oder eine RFID-Einheit, anordenbar ist (vgl. Figur 7). Der Grundkörper 16 umfasst zumindest einen Elektronikaufnahmebereich 56, der zwischen der Anordnungsebene 30 und der weiteren Anordnungsebene 34 angeordnet ist, insbesondere betrachtet entlang einer zumindest im Wesentlichen senkrecht zu einer Verbindungsrichtung 38 der Kontaktelemente 18, 20, 22, 24, 26, 28 verlaufenden Richtung. Vorzugsweise ist der Elektronikaufnahmebereich 56 zwischen der Anordnungsebene 30 und der weiteren Anordnungsebene 34 angeordnet, insbesondere entlang einer zumindest im Wesentlichen senkrecht zur Anordnungsebenen 30 und/oder zur weiteren Anordnungsebene 34 verlaufende Richtung. Der Elektronikaufnahmebereich 56 ist vorzugsweise entlang der zumindest im Wesentlichen senkrecht zur Anordnungsebene 30 und/oder zur weiteren Anordnungsebene 34 verlaufenden Richtung zwischen den Einzelaufnahmekammern 40, 42, 44 der Anordnungsebene 30 und den Einzelaufnahmekammern 46, 48, 50 der weiteren Anordnungsebene 34 angeordnet. Der Elektronikaufnahmebereich 56 ist vorzugsweise entlang einer zumindest im Wesentlichen senkrecht zur Verbindungsrichtung 38 verlaufenden Richtung zwischen den Einzelaufnahmekammern 40, 42, 44 der Anordnungsebene 30 und den Einzelaufnahmekammern 46, 48, 50 der weiteren Anordnungsebene 34 angeordnet (vgl. Figur 7).

Der Grundkörper 16 bildet zumindest teilweise einen Isolator zwischen den Kontaktelementen 18, 20, 22, 24, 26, 28. Der Grundkörper 16 ist vorzugsweise dazu vorgesehen, als thermischer und/oder als elektrischer Isolator zwischen den Kontaktelementen 18, 20, 22, 24, 26, 28 zu wirken, insbesondere zumindest zwischen den Kontaktelementen 18, 20, 22 der Gruppe 32 von Kontaktelementen 18, 20, 22 und den Kontaktelementen 24, 26, 28 der weiteren Gruppe 36 von Kontaktelementen 24, 26, 28. Insbesondere ist der Grundkörper 16 dazu vorgesehen, als thermischer und/oder als elektrischer Isolator zwischen den einzelnen Kontaktelementen 18, 20, 22 der Gruppe 32 von Kontaktelementen 18, 20, 22 und/oder zwischen den einzelnen Kontaktelementen 24, 26, 28 der weiteren Gruppe 36 von Kontaktelementen 24, 26, 28 zu wirken. Vorzugsweise umfasst die Kontakthaltervorrichtung 10 zumindest eine am Grundkörper 16 angeordnete Kühleinheit 60 zu einer Abführung von Wärme der Kontaktelemente 18, 20, 22, 24, 26, 28 (vgl. Figur 7).

## Patentansprüche

1. Kontakthaltervorrichtung für eine Handwerkzeugmaschine, mit zumindest einem, insbesondere innerhalb einer Gehäuseeinheit (14) der Handwerkzeugmaschine anordenbaren, Grundkörper (16) zu einer Aufnahme und/oder Fixierung von Kontaktelementen (18, 20, 22, 24, 26, 28) zu einer Übertragung von Datensignalen und/oder elektrischer Energie, wobei der Grundkörper (16) zumindest eine Anordnungsebene (30) aufweist, in der zumindest eine Gruppe (32) von Kontaktelementen (18, 20, 22) angeordnet ist, **wobei** der Grundkörper (16) zumindest eine weitere Anordnungsebene (34) aufweist, in der zumindest eine weitere Gruppe (36) von Kontaktelementen (24, 26, 28) angeordnet ist und die versetzt zur Anordnungsebene (30) angeordnet ist, wobei der Grundkörper (16) in der Anordnungsebene (30) angeordnete Einzelaufnahmekammern (40, 42, 44) zu einer Aufnahme von einzelnen Kontaktelementen (18, 20, 22) der Gruppe (32) von Kontaktelementen (18, 20, 22) umfasst, **dadurch gekennzeichnet, dass** der Grundkörper (16) auch in der weiteren Anordnungsebene (34) angeordnete Einzelaufnahmekammern (46, 48, 50) zu einer Aufnahme von einzelnen Kontaktelementen (24, 26, 28) der weiteren Gruppe (36) von Kontaktelementen (24, 26, 28) umfasst.

2. Kontakthaltervorrichtung nach Anspruch 1, **dadurch gekennzeichnet, dass** die Anordnungsebene (30) und die weitere Anordnungsebene (34) parallel versetzt zueinander angeordnet sind, insbesondere betrachtet entlang einer zumindest im Wesentlichen senkrecht zu einer Verbindungsrichtung (38) der Kontaktelemente (18, 20, 22, 24, 26, 28) verlaufenden Richtung.

3. Kontakthaltervorrichtung nach einem der vorhergehenden Ansprüche, **dadurch gekennzeichnet, dass** der Grundkörper (16) zumindest einen Aufnahmebereich (52) für zumindest ein Abschirmungs- und/oder Filterelement (54) zu einer Abschirmung von einzelnen Kontaktelementen (18, 20, 22, 24, 26, 28) der Gruppe (32) von Kontaktelementen (18, 20, 22) und/oder der weiteren Gruppe (36) von Kontaktelementen (24, 26, 28) und/oder zu einer Filterung von Datensignalen aufweist.

4. Kontakthaltervorrichtung nach Anspruch 3, **dadurch gekennzeichnet, dass** der Aufnahmebereich (52) zumindest teilweise in der weiteren Anordnungsebene (34) angeordnet ist.

5. Kontakthaltervorrichtung nach einem der vorhergehenden Ansprüche, **dadurch gekennzeichnet, dass** der Grundkörper (16) zumindest einen Elektronikaufnahmebereich (56) aufweist, in der zumindest eine Elektronikeinheit (58), insbesondere eine Bluetootheinheit und/oder eine RFID-Einheit, anordenbar ist.

6. Kontakthaltervorrichtung nach einem der vorhergehenden Ansprüche, **dadurch gekennzeichnet, dass** der Grundkörper (16) zumindest einen Elektronikaufnahmebereich (56) umfasst, der zwischen der Anordnungsebene (30) und der weiteren Anordnungsebene (34) angeordnet ist, insbesondere betrachtet entlang einer zumindest im Wesentlichen senkrecht zu einer Verbindungsrichtung (38) der Kontaktelemente (18, 20, 22, 24, 26, 28) verlaufenden Richtung.

7. Kontakthaltervorrichtung nach einem der vorhergehenden Ansprüche, **dadurch gekennzeichnet, dass** der Grundkörper (16) zumindest teilweise einen Isolator zwischen den Kontaktelementen (18, 20, 22, 24, 26, 28) bildet.

8. Kontakthaltervorrichtung nach einem der vorhergehenden Ansprüche, **gekennzeichnet durch** zumindest eine am Grundkörper (16) angeordnete Kühleinheit (60) zu einer Abführung von Wärme der Kontaktelemente (18, 20, 22, 24, 26, 28).

9. Kontakthaltervorrichtung nach einem der vorhergehenden Ansprüche, **dadurch gekennzeichnet, dass** jeweils ein Kontaktelement (18, 20, 22, 24, 26, 28) mit einem Kabel verbunden ist.

10. Kontakthaltervorrichtung nach Anspruch 9, **dadurch gekennzeichnet, dass** die Kabel teilweise in den Einzelaufnahmekammern (40, 42, 44, 46, 48, 50) angeordnet sind.

11. Kontakthaltervorrichtung nach einem der vorhergehenden Ansprüche, **dadurch gekennzeichnet, dass** der Grundkörper (16) als einzelnes Bauteil ausgebildet ist.

12. Kontakthaltervorrichtung nach einem der vorhergehenden Ansprüche, **dadurch gekennzeichnet, dass** mittels der einen Gruppe (32) ein optionales Funktionsmodul (64) mit elektrischer Energie einer Energieversorgungseinheit (74) der Handwerkzeugmaschine (12) versorgbar ist.

13. Kontakthaltervorrichtung nach einem der vorhergehenden Ansprüche, **dadurch gekennzeichnet, dass** die weiteren Gruppe (36) zu einer Energieversorgung einer Antriebseinheit (66) vorgesehen ist.

14. Handwerkzeugmaschine mit zumindest einer Kontakthaltervorrichtung nach einem der vorhergehenden Ansprüche und mit zumindest einer Gehäuseeinheit (14), wobei die Kontakthaltervorrichtung zumindest teilweise innerhalb der Gehäuseeinheit (14) angeordnet ist.

## Claims

1. Contact holder apparatus for a handheld power tool, comprising at least one main body (16), in particular which can be arranged within a housing unit (14) of the handheld power tool, for receiving and/or fixing contact elements (18, 20, 22, 24, 26, 28) for transmitting data signals and/or electrical power, wherein the main body (16) has at least one arrangement plane (30) in which at least one group (32) of contact elements (18, 20, 22) is arranged, wherein the main body (16) has at least one further arrangement plane (34) in which at least one further group (36) of contact elements (24, 26, 28) is arranged and which is arranged offset in relation to the arrangement plane (30), wherein the main body (16) comprises individual receiving chambers (40, 42, 44), which are arranged in the arrangement plane (30), for receiving individual contact elements (18, 20, 22) of the group (32) of contact elements (18, 20, 22), **characterized in that** the main body (16) also comprises individual receiving chambers (46, 48, 50), which are arranged in the further arrangement plane (34), for receiving individual contact elements (24, 26, 28) of the further group (36) of contact elements (24, 26, 28).

2. Contact holder apparatus according to Claim 1, **characterized in that** the arrangement plane (30) and the further arrangement plane (34) are arranged in parallel offset in relation to one another, in particular as viewed along a direction which runs at least substantially perpendicularly to a connecting direction (38) of the contact elements (18, 20, 22, 24, 26, 28).

3. Contact holder apparatus according to either of the preceding claims, **characterized in that** the main body (16) has at least one receiving region (52) for at least one shielding and/or filter element (54) for shielding individual contact elements (18, 20, 22, 24, 26, 28) of the group (32) of contact elements (18, 20, 22) and/or of the further group (36) of contact elements (24, 26, 28) and/or for filtering data signals.

4. Contact holder apparatus according to Claim 3, **characterized in that** the receiving region (52) is at least partially arranged in the further arrangement plane (34).

5. Contact holder apparatus according to one of the preceding claims, **characterized in that** the main body (16) has at least one electronics receiving region (56) in which at least one electronics unit (58), in particular a Bluetooth unit and/or an RFID unit, can be arranged.

6. Contact holder apparatus according to one of the preceding claims, **characterized in that** the main body (16) comprises at least one electronics receiving region (56) which is arranged between the arrangement plane (30) and the further arrangement plane (34), in particular as viewed along a direction which runs at least substantially perpendicularly to a connecting direction (38) of the contact elements (18, 20, 22, 24, 26, 28).

7. Contact holder apparatus according to one of the preceding claims, **characterized in that** the main body (16) at least partially forms an insulator between the contact elements (18, 20, 22, 24, 26, 28).

8. Contact holder apparatus according to one of the preceding claims, **characterized by** at least one cooling unit (60), which is arranged on the main body (16), for dissipating heat from the contact elements (18, 20, 22, 24, 26, 28).

9. Contact holder apparatus according to one of the preceding claims, **characterized in that** in each case one contact element (18, 20, 22, 24, 26, 28) is connected to a cable.

10. Contact holder apparatus according to Claim 9, **characterized in that** the cables are partially arranged in the individual receiving chambers (40, 42, 44, 46, 48, 50) .

11. Contact holder apparatus according to one of the preceding claims, **characterized in that** the main body (16) is designed as an individual component.

12. Contact holder apparatus according to one of the preceding claims, **characterized in that** an optional functional module (64) can be supplied with electrical power from a power supply unit (74) of the handheld power tool (12) by means of the one group (32).

13. Contact holder apparatus according to one of the preceding claims, **characterized in that** the further group (36) is provided for supplying power to a drive unit (66) .

14. Handheld power tool comprising at least one contact holder apparatus according to one of the preceding claims and comprising at least one housing unit (14), wherein the contact holder apparatus is at least partially arranged within the housing unit (14).

## Revendications

1. Dispositif de support de contact pour un outil à main motorisé, comprenant au moins un corps de base (16) pouvant en particulier être disposé à l'intérieur d'une unité de carter (14) de l'outil à main motorisé et destiné à recevoir et/ou à fixer des éléments de contact (18, 20, 22, 24, 26, 28) pour une transmission de signaux de données et/ou d'énergie électrique, le corps de base (16) présentant au moins un plan de disposition (30) dans lequel est disposé au moins un groupe (32) d'éléments de contact (18, 20, 22), dans lequel le corps de base (16) présente au moins un plan de disposition supplémentaire (34) dans lequel est disposé au moins un groupe supplémentaire (36) d'éléments de contact (24, 26, 28) et qui est disposé de manière décalée par rapport au plan de disposition (30), dans lequel le corps de base (16) comprend des chambres de logement individuelles (40, 42, 44) disposées dans le plan de disposition (30) et destinées à recevoir des éléments de contact individuels (18, 20, 22) du groupe (32) d'éléments de contact (18, 20, 22), **caractérisé en ce que** le corps de base (16) comprend également des chambres de réception individuelles (46, 48, 50) disposées dans le plan de disposition supplémentaire (34) pour recevoir des éléments de contact individuels (24, 26, 28) du groupe supplémentaire (36) d'éléments de contact (24, 26, 28).

2. Dispositif de support de contact selon la revendication 1, **caractérisé en ce que** le plan de disposition (30) et le plan de disposition supplémentaire (34) sont disposés en décalage parallèle l'un par rapport à l'autre, en particulier vu suivant une direction s'étendant de manière substantiellement perpendiculaire à une direction de liaison (38) des éléments de contact (18, 20, 22, 24, 26, 28).

3. Dispositif de support de contact selon l'une quelconque des revendications précédentes, **caractérisé en ce que** le corps de base (16) présente au moins une zone de réception (52) pour au moins un élément de blindage et/ou de filtrage (54) destiné à blinder des éléments de contact individuels (18, 20, 22, 24, 26, 28) du groupe (32) d'éléments de contact (18, 20, 22) et/ou du groupe supplémentaire (36) d'éléments de contact (24, 26, 28) et/ou à filtrer des signaux de données.

4. Dispositif de support de contact selon la revendication 3, **caractérisé en ce que** la zone de réception (52) est disposée au moins en partie dans le plan de disposition supplémentaire (34).

5. Dispositif de support de contact selon l'une quelconque des revendications précédentes, **caractérisé en ce que** le corps de base (16) présente au moins une zone de réception d'électronique (56) dans laquelle au moins une unité électronique (58) peut être disposée, en particulier une unité Bluetooth et/ou une unité RFID.

6. Dispositif de support de contact selon l'une quelconque des revendications précédentes, **caractérisé en ce que** le corps de base (16) comprend au moins une zone de réception d'électronique (56) qui est disposée entre le plan de disposition (30) et le plan de disposition supplémentaire (34), en particulier vu suivant une direction s'étendant de manière substantiellement perpendiculaire à une direction de liaison (38) des éléments de contact (18, 20, 22, 24, 26, 28).

7. Dispositif de support de contact selon l'une quelconque des revendications précédentes, **caractérisé en ce que** le corps de base (16) constitue au moins en partie un isolant entre les éléments de contact (18, 20, 22, 24, 26, 28).

8. Dispositif de support de contact selon l'une quelconque des revendications précédentes, **caractérisé par** une unité de refroidissement (60) disposée sur le corps de base (16) pour dissiper la chaleur des éléments de contact (18, 20, 22, 24, 26, 28).

9. Dispositif de support de contact selon l'une quelconque des revendications précédentes, **caractérisé en ce que** respectivement un élément de contact (18, 20, 22, 24, 26, 28) est relié à un câble.

10. Dispositif de support de contact selon la revendication 9, **caractérisé en ce que** les câbles sont disposés en partie dans les chambres de réception individuelles (40, 42, 44, 46, 48, 50).

11. Dispositif de support de contact selon l'une quelconque des revendications précédentes, **caractérisé en ce que** le corps de base (16) est réalisé comme un composant individuel.

12. Dispositif de support de contact selon l'une quelconque des revendications précédentes, **caractérisé en ce que** ledit au moins un groupe (32) permet d'alimenter un module fonctionnel (64) en option avec l'énergie électrique d'une unité d'alimentation en énergie (74) de l'outil à main motorisé (12).

13. Dispositif de support de contact selon l'une quelconque des revendications précédentes, **caractérisé en ce que** le groupe supplémentaire (36) est une alimentation en énergie d'une unité d'entraînement (66) .

14. Outil à main motorisé, comprenant au moins un dispositif de support de contact selon l'une quelconque des revendications précédentes et comprenant au moins une unité de carter (14), le dispositif de support de contact étant disposé au moins en partie à l'intérieur de l'unité de boîtier (14).
